# EUROPÄISCHE PATENTANMELDUNG

(11) **EP 0 575 720 A1**
(43) Veröffentlichungstag der Anmeldung: **29.12.1993**
(21) Anmeldenummer: 93106217.8
(22) Anmeldetag: 16.04.1993
(51) Int. Cl.: B62L 3/02, B62L 1/16, F16D 55/2255

(54) **Hydraulisch betätigte Felgenbremse für Fahrräder**

(30) Priorität: 25.06.1992 DE 4220854
(71) Anmelder: GUSTAV MAGENWIRTH GmbH & Co., D-72574 Bad Urach (DE)
(72) Erfinder: Fritschle, Stefan, 7432 Bad Urach-Wittlingen (DE)
(74) Vertreter: Hoeger, Stellrecht & Partner

(57) **Zusammenfassung**

Hydraulisch betätigte Felgenbremse (1) für Fahrräder mit einem an einem Rahmenteil des Fahrrads befestigten Träger (2), an dem jeweils links und rechts eines Rades (6) des Fahrrads auf einem Achsbolzen (3) ein Hebelarm (4a,4b) schwenkbar gelagert ist, wobei die Heblarme einerseits mit wenigstens einem Hydraulikzylinder (5) verbunden sind und andererseits je einen an einer Felgenbremse (6a) des Rades angreifenden Bemsklotz (7) tragen. An den Hebelarmen sind jeweils Getriebelemente (8) starr angeordnet, die in gegenseitigem formschlüssigen Eingriff stehen und nur eine gemeinsame, gegenläufige Schwenkbewegung der Helarme zulassen.

## Beschreibung

Die Erfindung betrifft eine hydraulisch betätigte Felgenbremse für Fahrräder gemäß dem Oberbegriff des Patentanspruchs 1.

Derartige Felgenbremsen sind beispielsweise aus der DE-OS 33 03 586 bekannt. Die Bremsklötze sind bei einer solchen Felgenbremse, wie auch bei einer rein mechanisch betätigten, so eingestellt, daß sie sich zur Erzielung einer schnellen Bremswirkung möglichst dicht benachbart zur Felge befinden. Beim Betätigen der Felgenbremse kann es vorkommen, daß aufgrund einer kleinen Unsymmetrie der Bremse zunächst nur ein Bremsklotz an der Felge anliegt und eine Bremswirkung erzielt, und der andere Bremsklotz erst später zur Anlage an die Felge gelangt. Dies ist beim Bremsvorgang nicht besonders störend, da beide Bremsklötze in sehr kurzen Zeitabständen nacheinander zur Anlage an die Felge gelangen.

Störend wirkt sich hingegen aus, daß diese Unsymmetrie auch beim Lösen der Felgenbremse noch erhalten bleibt. Das bedeutet, daß sich zunächst ein Bremsklotz bei gelöster Felgenbremse von der Felge entfernt, während der andere noch an der Felge anliegt. Erst danach wird auch der andere Bremsklotz von der Felge abgehoben und dadurch die Bremswirkung weggenommen. Es ist sogar möglich, daß der eine Bremsklotz sich weiter als vorgesehen von der Felge entfernt, während der andere sich entsprechend weniger oder gar nicht entfernt und an der Felge streift und eine - wenn auch geringe - unerwünschte Restbremsung ausübt. Dieses undefinierte Beendigen des Bremsvorgangs und die damit verbundene Bremswirkung wirkt sich dahingehend störend aus, daß das Fahrrad zu einem Zeitpunkt noch abgebremst wird, an dem eine Bremswirkung bereits nicht mehr erwünscht ist.

Insbesondere bei einer sportlichen Benutzung des Fahrrads, beispielsweise bei Fahrradrennen, kostet das den Sportler zusätzliche Kraft und mindert seine Gewinnchancen.

Es ist Aufgabe der Erfindung, eine gattungsgemäße hydraulisch betätigte Felgenbremse für Fahrräder so zu verbessern, daß ein gleichmäßiges und gleichzeitiges Betätigen der Felgenbremse erreicht wird und die Felgenbremse gleichmäßig und gleichzeitig schließt, sowie ebenso gleichmäßig und gleichzeitig wieder öffnet, so daß der Bremsvorgang in definierter Weise abläuft.

Die Aufgabe wird erfindungsgemäß durch die kennzeichnenden Merkmale des Patentanspruchs 1 gelöst.

Die nachfolgende Beschreibung bevorzugter Ausführungsformen dient im Zusammenhang mit beiliegender Zeichnung der weiteren Erläuterung. Es zeigen:
- Fig. 1: eine teilweise geschnittene Vorderansicht einer hydraulisch betätigten Felgenbremse für Fahrräder;
- Fig. 2: eine teilweise, entlang der Linie 2-2 in Fig. 1 geschnittene Seitenansicht der Felgenbremse;
- Fig. 3: ein Getriebeelement der Felgenbremse und
- Fig. 4: eine Lasche der Felgenbremse.

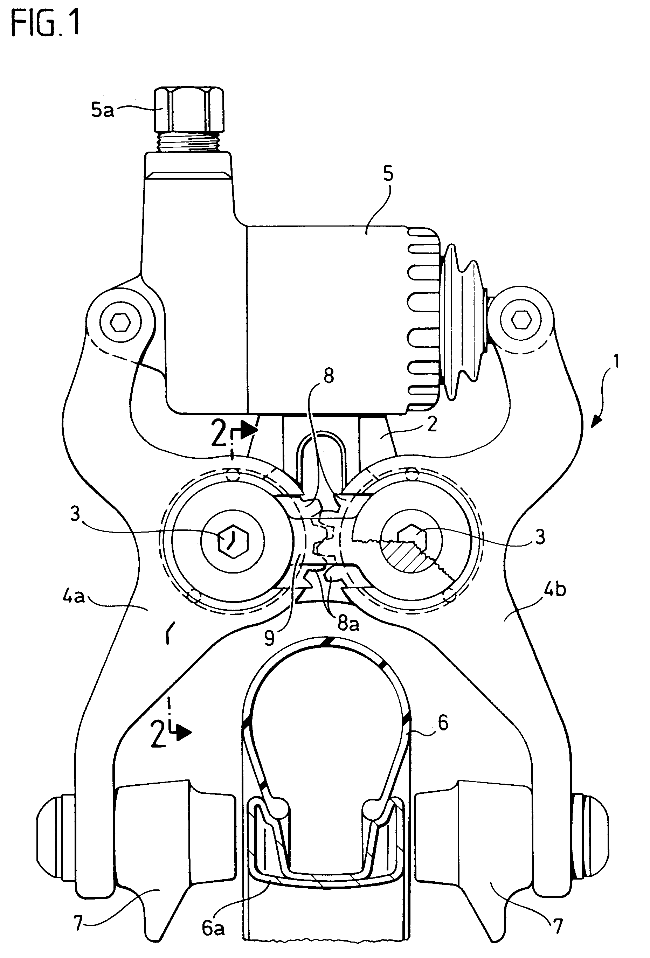

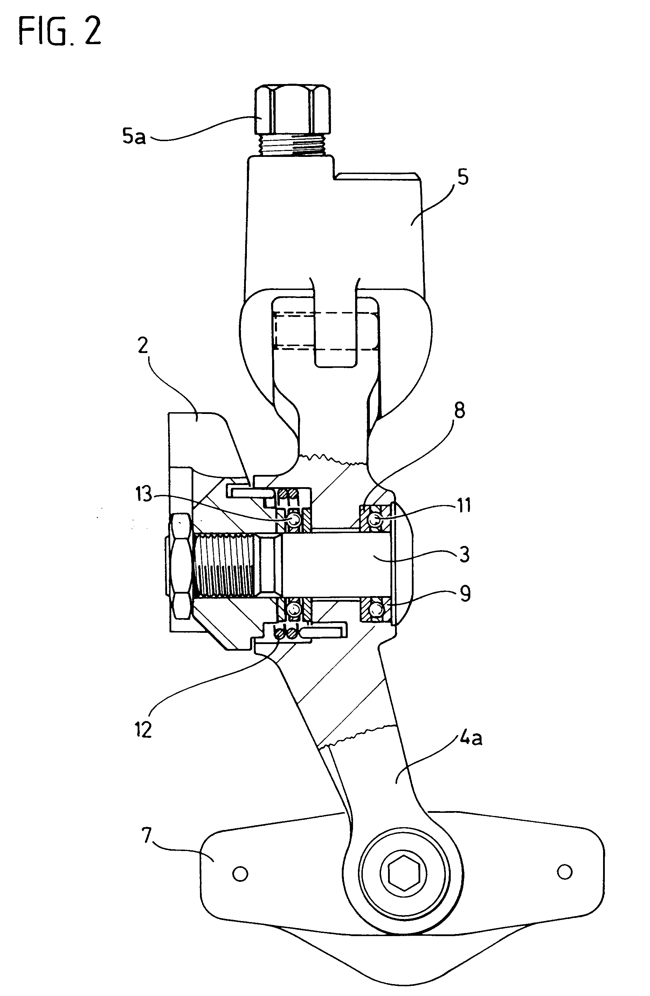

Wie aus Fig. 1 und Fig. 2 hervorgeht, umfaßt eine hydraulisch betätigte Felgenbremse 1 für Fahrräder, insbesondere Rennräder einen an einem an sich bekannten, nicht dargestellten Rahmenteil, z. B. der Vorderradgabel, des Fahrrads befestigten Träger 2, an dem jeweils links und rechts einer Felge 6a eines Rades 6 des Fahrrads auf einem Achsbolzen 3 ein Hebelarm 4a, 4b schwenkbar gelagert ist. Die Hebelarme 4a, 4b sind auf ihrer einen Seite in bekannter Weise mit einem Hydraulikzylinder 5 verbunden, wobei der Hebelarm 4a mit dem Gehäuse und der Hebelarm 4b mit dem Kolben gekoppelt sind. Andererseits tragen die Hebelarme 4a, 4b an ihrer dem Rad 6 des Fahrrads zugewandten Seite je einen an der Felge 6a des Rades 6 angreifenden Bremsklotz 7. Am Zylinder 5 ist eine an sich bekannte Einrichtung 5a zur Befestigung eines mit einem Betätigungszylinder verbundenen Druckschlauches angeordnet.

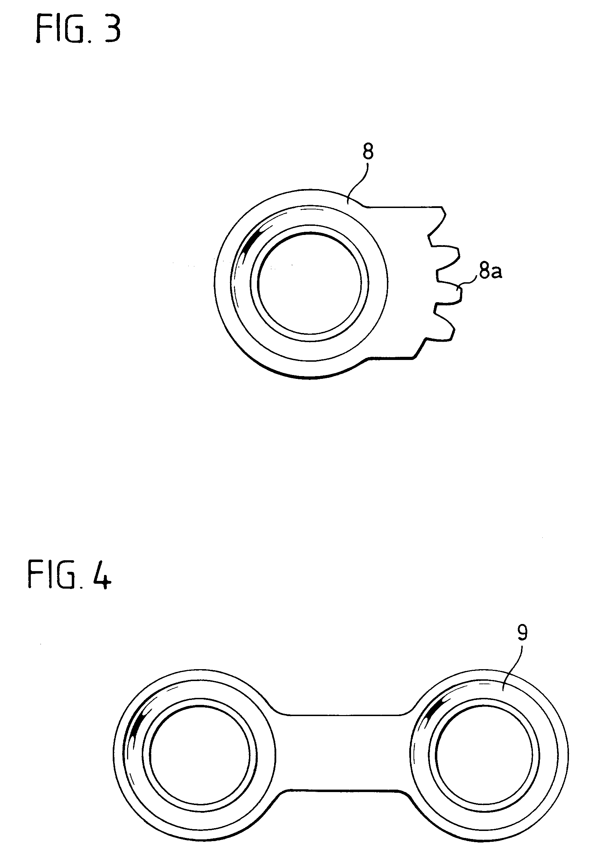

An den Hebelarmen 4a, 4b sind jeweils Getriebeelemente 8 in dafür vorgesehenen Ausnehmungen angeordnet, was eine starre, verdrehsichere Befestigung der Getriebeelemente 8 an den Hebelarmen 4a, 4b sicherstellt. Die Getriebeelemente 8 sind als miteinander kämmende Zahnsegmente 8a ausgebildet, die in gegenseitigem formschlüssigem Eingriff stehen und nur eine gemeinsame, gegenläufige Schwenkbewegung der Hebelarme 4a, 4b zulassen. Eines dieser Getriebeelemente 8 ist in Fig. 3 detailliert dargestellt.

Die Achsbolzen 3 sind durch eine in Fig. 4 detailliert dargestellte Lasche 9 miteinander verbunden. Diese Lasche hält die Getriebeelemente in gegenseitigem Eingriff und verhindert ein Auseinanderspreizen der Achsbolzen 3 unter der Bremswirkung.

Wie aus Fig. 2 ersichtlich, sind die Hebelarme 4a, 4b auf den Achsbolzen 3 durch Wälzlager 11, 13 abgestützt, wobei die Getriebelemente 8 und die Lasche 9 Axialdruckscheiben des Wälzlagers 11 bilden.

Durch Federn 12 werden die Hebelarme 4a, 4b jeweils in ihre Ausgangslage (Nicht-Bremsstellung) vorgespannt.

Beim Betätigen der Felgenbremse werden die Hebelarme 4a, 4b um die Achsbolzen 3 geschwenkt. Hierdurch werden die Bremsklötze 7 hin zur Felge 6a des Rades 6 bewegt. Aufgrund des Hydraulikzylinders 5 läßt sich dabei eine große Andruckkraft der Bremsklötze 7 auf die Felge 6a der Räder 6 des Fahrrades erzielen.

Wegen der Getriebeelemente 8 kommen die Bremsklötze 7 simultan und völlig gleichmäßig zur Anlage an die Felge 6a des Rades 6, so daß ein definierter und gleichmäßiger Beginn des Bremsvorganges ermöglicht wird. Die Getriebeelemente 8 dienen darüber hinaus aber auch einer definierten Beendigung des Bremsvorganges. Es hat sich nämlich bei bekannten Felgenbremsen für Fahrräder gezeigt, daß die Bremsklötze 7 häufig nicht simultan von der Felge des Fahrrades abheben, so daß ein Bremsklotz an der Felge schleift, während der andere von dieser entfernt ist. Dies wird durch die Getriebeelemente 8 verhindert. Da beide Hebelarme 4a, 4b nur eine gemeinsame, gegenläufige Schwenkbewegung ausführen können, werden beide durch die Federn 12 simultan in ihre Ausgangslage zurückgestellt. Dadurch heben beide Bremsklötze 7 gleichzeitig von der Felge ab.

## Patentansprüche

1. Hydraulisch betätigte Felgenbremse für Fahrräder mit einem an einem Rahmenteil des Fahrrads befestigten Träger, an dem jeweils links und rechts eines Rades des Fahrrads auf einem Achsbolzen ein Hebelarm schwenkbar gelagert ist, wobei die Hebelarme einerseits mit wenigstens einem Hydraulikzylinder verbunden sind und andererseits je einen an einer Felge des Rades angreifenden Bremsklotz tragen,
**dadurch gekennzeichnet,**
daß an den Hebelarmen (4a, 4b) jeweils Getriebeelemente (8) starr angeordnet sind, die in gegenseitigem formschlüssigem Eingriff stehen und nur eine gemeinsame, gegenläufige Schwenkbewegung der Hebelarme (4a, 4b) zulassen.

2. Felgenbremse nach Anspruch 1, dadurch gekennzeichnet, daß die Getriebeelemente (8) als miteinander kämmende Zahnsegmente (8a) ausgebildet sind.

3. Felgenbremse nach Anspruch 1, dadurch gekennzeichnet, daß die Achsbolzen (3) durch eine Lasche (9) miteinander verbunden sind, welche die Getriebeelemente (8) in gegenseitigem Eingriff hält.

4. Felgenbremse nach Anspruch 3, dadurch gekennzeichnet, daß die Hebelarme (4a, 4b) auf den Achsbolzen (3) durch Wälzlager (11, 13) abgestützt sind, und die Getriebeelemente (8) und die Laschen (9) Axialdruckscheiben des einen Wälzlagers (11) bilden.

5. Felgenbremse nach Anspruch 1, dadurch gekennzeichnet, daß die Hebelarme (4a, 4b) durch je eine Feder (12) in eine Ausgangslage vorgespannt sind.
